# EUROPÄISCHE PATENTSCHRIFT

(11) **EP 1 933 075 B1**
(45) Veröffentlichungstag und Bekanntmachung des Hinweises auf die Patenterteilung: **14.07.2010**
(21) Anmeldenummer: 08004238.5
(22) Anmeldetag: 08.12.2004
(51) Int. Cl.: F16L 55/054, F16L 55/053

(54) **Pulsationsdämpfer, Verfahren zur Herstellung und Verwendung der Pulsationsdämpfer**
Pulsation dampener, method for manufacturing pulsation dampener and usage thereof
Amortisseur de pulsations, son procédé de fabrication et utilisation de l'amortisseur de pulsations

(43) Veröffentlichungstag der Anmeldung: 18.06.2008
(62) Teilanmeldung aus: 04029117.1
(73) Patentinhaber: Carl Freudenberg KG, 69469 Weinheim (DE)
(72) Erfinder: Luxem, Andreas, 56333 Winningen (DE); Käsler, Richard, 53424 Remagen (DE); Stubenrauch, Frank, 65558 Burgschwalbach (DE)

(56) Entgegenhaltungen:
- DE-A1- 3 333 597
- GB-A- 1 358 473
- US-A- 2 875 787
- US-A- 3 625 242
- US-A- 4 431 200
- US-A- 4 759 387
- US-A- 4 979 441
- US-A- 6 032 651

## Beschreibung

### Technisches Gebiet

Die Erfindung betrifft einen Pulsationsdämpfer nach dem Oberbegriff des Patentanspruchs 1.

### Stand der Technik

Aus der US 4,759,387 A ist ein Pulsationsdämpfer bekannt, dessen Ausgleichkammer eine Zuleitung aufweist. Aus der US 4,979,441 A ist ein Pulsationsdämpfer bekannt, der einen zylindrischen Außenkörper mit unterschiedlichen Außendurchmessern umfasst. Aus der US 2,875,787 A ist ein Pulsationsdämpfer bekannt, dessen Ausgleichkammer Zuleitungen aufweist. Aus der US 3,625,242 A ist ein Pulsationsdämpfer bekannt, dessen Kanal jeweils endseitig Gewindegänge aufweist. Aus der GB 1 358 473 A ist ein gattungsbildender Pulsationsdämpfer mit einem verfahrbaren Kolben bekannt, wobei am Kolben eine flexible Membran anliegt. Ein solcher Pulsationsdämpfer ist auch aus der US 6,032,651 A bekannt. Aus der DE 33 33 597 A1 ist ein Pulsationsdämpfer bekannt, in dessen Ausgleichkammer ein Schaumstoffkörper angeordnet ist. Aus der US 4,431,200 A ist ein Sicherungsring bekannt, der eine zick-zack-förmige Strukur aufweist.

Derartige Pulsationsdämpfer und Verfahren sind aus dem Stand der Technik bereits bekannt. Pulsationsdämpfer der eingangs genannten Art finden Verwendung in hydraulischen Leitungen. Sie dienen insbesondere der Glättung bzw. Reduzierung von Pulsationen in hydraulischen Leitungen.

Des Weiteren finden die genannten Pulsationsdämpfer Verwendung als Kolbenspeicher. Kolbenspeicher werden insbesondere in Fahrwerken von Kraftfahrzeugen eingesetzt.

Die gattungsbildenden Pulsationsdämpfer und Verfahren zur Herstellung solcher Pulsationsdämpfer weisen jedoch im Hinblick auf den praktischen Einsatz Nachteile auf. Bei den gattungsbildenden Pulsationsdämpfem ist insbesondere nachteilig, dass deren Ausgleichkammern häufig nur unter Vorkehrung komplexer Einrichtung mit Druck beaufschlagbar sind. Um einen einwandfreien Einsatz der Pulsationsdämpfer zu gewährleisten, müssen diese einer ständigen Wartung unterzogen werden. Bei der Wartung muss zunächst der Druck innerhalb der Ausgleichkammer überprüft werden und sodann dem Solldruck angepasst werden. Hierzu sind die Ausgleichkammern häufig mit Befüllstutzen versehen, die in nur aufwendiger Weise gegen die Atmosphäre zufriedenstellend abdichtbar sind.

Aufgrund nur wenig gebrauchstauglicher Abdichtungsmaßnahmen weisen die Ausgleichkammern nach einiger Zeit nicht mehr den Druck auf, der für eine einwandfreie Funktion der Pulsationsdämpfer notwendig ist.

### Darstellung der Erfindung

Der Erfindung liegt die Aufgabe zugrunde, einen Pulsationsdämpfer der eingangs genannten Art derart auszugestalten und weiterzubilden, dass eine spielfreie und abgedichtete Bewegung des Kolbens innerhalb der Ausgleichkammer realisiert ist, bei welcher keine Verkippungen auftreten.

Die vorliegende Erfindung löst die zuvor genannte Aufgabe durch die Merkmale des Patentanspruchs 1.

Danach ist ein Pulsationsdämpfer der eingangs genannten Art **dadurch gekennzeichnet, dass** dem Kolben mindestens ein Führungsring zur Anlage an der Innenwandung der Ausgleichkammer und mindestens ein Dichtring zur dichtenden Anlage an der Innenwandung der Ausgleichkammer zugeordnet ist, wobei dem Kolben ein Stützring zugeordnet ist.

Erfindungsgemäß ist zunächst erkannt worden, dass die gattungsbildenden Pulsationsdämpfer in konstruktiver Hinsicht wenig gebrauchstauglich ausgebildet sind. In einem nächsten Schritt ist erkannt worden, dass die bekannten Pulsationsdämpfer im Hinblick auf die Abdichtung der Ausgleichkammer erhebliche Nachteile aufweisen. Schließlich ist erkannt worden, dass eine integrale Ausbildung der Ausgleichkammer, welche als abgeschlossener Raum ausgebildet ist, nur in geringem Maße Dichtungsvorkehrungen erfordert.

Eine aufwendige Abdichtung einer Zuleitung ist insoweit nicht notwendig. Des Weiteren werden keine Einrichtungen zur nachträglichen Befüllung der Ausgleichkammer benötigt. Insoweit weist ein erfindungsgemäßer Pulsationsdämpfer einen konstruktiv einfachen Aufbau auf, der nach einmaliger Befüllung der Ausgleichkammer den in ihr vorherrschenden Druck bewahrt und einen optimalen Betrieb gewährleistet.

Der Pulsationsdämpfer weist einen Kolben auf, dem mindestens ein Führungsring zur Anlage an der Innenwandung der Ausgleichkammer zugeordnet ist. Die Vorkehrung von Führungsringen erlaubt ein spielfreies Verfahren der Kolbenumfangsfläche an der Innenwandung der Ausgleichkammer. Insoweit ist eine problemlos gleitende Bewegung des Kolbens ohne Verkippungen realisierbar.

Dem Kolben ist mindestens ein Dichtring zur dichtenden Anlage an der Innenwandung der Ausgleichkammer zugeordnet. Hierdurch ist realisiert, dass der Druck innerhalb der Ausgleichkammer konstant bleibt. Vor diesem Hintergrund ist denkbar, dass der Dichtring als Führung fungiert. Auf raffinierte Weise ist durch diese konkrete Ausgestaltung realisiert, dass die Anzahl an Führungsringen minimiert werden kann. Insoweit ist durch eine einzige Dichtung und einen einzigen weiteren Führungsring eine spielfreie und abgedichtete Bewegung des Kolbens innerhalb der Ausgleichkammer realisierbar.

Dem Kolben ist ein Stützring zugeordnet. Hierbei ist denkbar, dass der Stützring am Dichtring anliegt. Dies realisiert einen stabilen Sitz des Dichtrings, so dass dieser keinen Verkippungen oder Verdrehungen unterworfen wird.

Folglich ist die eingangs genannte Aufgabe gelöst.

Dem Kolben könnte zur Kraftbeaufschlagung eine Feder zugeordnet sein. Die Vorkehrung einer Feder erlaubt eine problemlose Einstellung der Grundsteifigkeit eines Pulsationsdämpfers durch Wahl einer geeigneten Federkonstante. Dabei könnten Spiralfedern, Blattfedern oder andere elastisch deformierbare Federelemente zum Einsatz kommen.

Vor diesem Hintergrund ist denkbar, dass die Feder innerhalb der Ausgleichkammer angeordnet ist und an der der Ausgleichkammer zugewandten Kolbenfläche anliegt. Durch diese konkrete Ausgestaltung wird der Kolben nicht nur durch den Druck innerhalb der Ausgleichkammer beaufschlagt, sondern zusätzlich durch die Federkraft. Diese konkrete Ausgestaltung erlaubt eine konstante Steifigkeit des Pulsationsdämpfers bei unterschiedlichen Temperaturen, da eventuelle Druckänderungen durch Erwärmung oder Abkühlung des Mediums in der Ausgleichkammer durch die Feder kompensierbar sind.

Die Innenwandung der Ausgleichkammer könnte zumindest teilweise spanlos gefertigt sein. Diese konkrete Ausgestaltung ermöglicht auf raffinierte Weise den Verzicht auf einen aufwendigen Rollierprozess, welcher notwendig ist, um Oberflächen zu glätten.

Der Grundkörper könnte ein Gewinde aufweisen. Die Vorkehrung eines Gewindes erlaubt auf problemlose Weise die Integration des Pulsationsdämpfers in ein bestehendes System hydraulischer Leitungen. Dabei ist insbesondere denkbar, dass ein Gewinde der Dimension M16 x 1,5 Verwendung findet.

Der Grundkörper könnte einstückig als Tiefziehteil ausgebildet sein. Diese konkrete Ausgestaltung erlaubt die Fertigung eines Pulsationsdämpfers, welcher aus wenigen Teilen zusammensetzbar ist. Denkbar ist vor diesem Hintergrund, dass aus einem Werkstück ein topfförmiger Grundkörper gebildet wird, in welchen ein Kolben einfügbar ist.

Die innere Oberfläche könnte Erhebungen aufweisen, die kleiner als 2µm sind. Eine solche Rauhigkeit stellt eine besondere Qualitätsgüte dar, die nur durch einen Tiefzieprozess erzielbar ist. Diese Qualitätsgüte erlaubt die Realisierung einer besonderen Dichtheit und eines ausgezeichneten Gleitvermögens von an einer solchen Fläche gleitenden Elementen.

Bei einer solchen Ausgestaltung des Grundkörpers ist denkbar, dass zumindest ein Sprengring als Anschlag für den Kolben vorgesehen ist. Dabei könnte der Sprengring am Inneren des Grundkörpers derart festgelegt sein, dass der Kolben nicht vollständig aus dem Grundkörper herausrutschen kann. Durch diese konkrete Ausgestaltung ist sichergestellt, dass die Ausgleichkammer nicht mit der Atmosphäre verbunden wird.

Der Grundkörper könnte einen separaten Deckel aufweisen, welcher zusammen mit dem Kolben die Ausgleichkammer begrenzt. Vor diesem Hintergrund ist denkbar, dass dem Deckel eine Dichtung zugeordnet und der Deckel durch eine Umbördelung des Grundkörpers festgelegt ist. Durch diese konkrete Ausgestaltung ist realisierbar, dass ein Kolben in ein hohles Werkstück eingefügt werden kann, wobei innerhalb des Werkstücks ein Anschlag für den Kolben ausgebildet ist. Dieser Anschlag könnte aus dem massiven Grundkörper in Form eines Überstands herausgebildet sein. Dies gewährleistet eine besonders stabile Anlage des Kolbens und verhindert ein Herausrutschen des Kolbens aus dem Grundkörper.

Der Grundkörper könnte eine Länge von bis zu 50 mm und einen Maximaldurchmesser von bis zu 50 mm aufweisen. Diese Dimensionierung des Pulsationsdämpfers ermöglicht dessen Verwendung in einem Einspritzsystem oder einer Einspritzanlage eines Kraftfahrzeugs. Vor diesem Hintergrund ist insbesondere denkbar, dass der Pulsationsdämpfer in Einspritzsystemen von Kraftfahrzeugen Verwendung findet, welche mit Dieselkraftstoff oder Benzin betrieben werden. Durch diese Verwendung des Pulsationsdämpfers ist vorteilhaft eine Glättung der Fluidversorgung des Einspritzsystems realisierbar. Die kleine Bauform des Pulsationsdämpfers ermöglicht eine einfache Montage.

Die Pulsationsdämpfer könnten bei einer Betriebstemperatur von -30°C bis +80°C und kurzzeitig sogar +90°C funktionsfähig sein. Der Berstdruck der Pulsationsdämpfer könnte jenseits von 100 bar liegen. Hierdurch ist der Einsatz der Pulsationsdämpfer in Kraftfahrzeugen möglich.

Die Innenräume sämtlicher Pulsationsdämpfer könnten entsprechend der DC Sauberheitsklassifizierung A 230 001 27 99 gereinigt sein. Dies entspricht einer Reinheitsklasse von 17/15/12 nach ISO 4406. Diese konkrete Ausgestaltung erlaubt den Einsatz der Pulsationsdämpfer in der Kraftfahrzeugindustrie.

In vorteilhafter Weise könnte der Arbeitsraum mit dem gleichen Medium befüllt werden, welches sich in der fertiggestellten Ausgleichkammer befindet. Diese konkrete Ausgestaltung erlaubt einen besonders einfachen Fertigungsprozess von Pulsationsdämpfern, da neben den im Arbeitsraum vorhandenen keine weiteren Medien durch komplexe Einrichtungen in die Ausgleichkammer eingefüllt werden müssen.

Es ist erkannt worden, dass hydraulische Versorgungssysteme durch die Verwendung eines erfindungsgemäßen Pulsationsdämpfers stets einen optimalen Betrieb bei einfachem konstruktivem Aufbau sicherstellen können. Um Wiederholungen zu vermeiden, sei auf die Ausführungen zum Pulsationsdämpfer als solchem verwiesen.

Das hydraulische Versorgungssystem könnte als Einspritzsystem eines Kraftfahrzeugs ausgebildet sein. Diese Verwendung realisiert vorteilhaft einen motorschonenden Betrieb. Die Verwendung gewährleistet vorteilhaft eine Glättung der Fluidversorgung des Einspritzsystems.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines bevorzugten Ausführungsbeispiels des erfindungsgemäßen Pulsationsdämpfers anhand der Zeichnung zu verweisen.

In Verbindung mit der Erläuterung des bevorzugten Ausführungsbeispiels anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: in einer Schnittzeichnung einen nicht erfindungsgemäßen Pulsationsdämpfer, welcher von einem Fluid durchströmt werden kann,
- Fig. 2: in einer Schnittzeichnung einen Pulsationsdämpfer, welcher einen in der Ausgleichkammer bewegbaren Kolben aufweist, und
- Fig. 3: in einer Schnittzeichnung einen Pulsationsdämpfer, welcher einen federkraftunterstützten Kolben aufweist.

### Ausführung der Erfindung

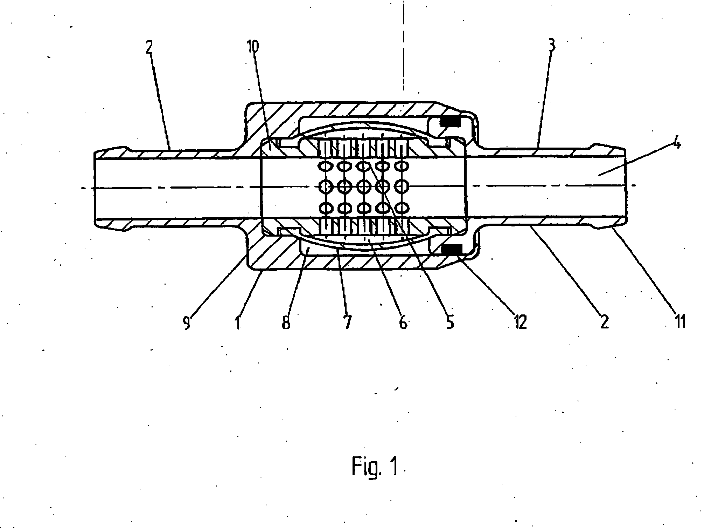

Fig. 1 zeigt einen nicht erfindungsgemäßen Pulsationsdämpfer, welcher in hydraulischen Leitungen Verwendung finden kann. Dieser umfasst einen Grundkörper 1 mit einem Einlass 2 und einem Auslass 3, die durch einen Kanal 4 miteinander strömungsverbunden sind. Der Kanal 4 weist Durchgänge 5 auf, welche den Kanal 4 mit einer Überlaufkammer 6 strömungsverbinden. Insoweit kann ein mit Pulsationen beaufschlagtes Fluid, welches den Kanal 4 durchströmt, durch die Durchgänge 5 in die Überlaufkammer 6 ausweichen.

Hierdurch können in dem Pulsationsdämpfer vor- oder nachgeschalteten Leitungen Drücke abgebaut werden. Die Überlaufkammer 6 ist durch eine flexible Membran von einer Ausgleichkammer 8 abgetrennt. Die Ausgleichkammer 8 ist als abgeschlossener Raum ohne Zuleitung ausgebildet.

Die Summe der Volumina der Ausgleichkammer 8 und der Überlaufkammer 6 ist im Betrieb stets konstant. Der Einlass 2, der Auslass 3 und der Kanal 4 sind koaxial und kolinear zueinander angeordnet. Die Ausgleichkammer 8 und die Überlaufkammer 6 sind konzentrisch zum Kanal 4 und zueinander angeordnet.

Der Grundkörper 1 besteht aus drei Bauteilen 9, 10 und 11, von denen jeweils zwei durch eine Dichtung 7, 12 gegeneinander abgedichtet sind. Das Bauteil 11 ist durch die Dichtung 12 gegen das Bauteil 9 abgedichtet. Das Bauteil 9 ist gegen das Bauteil 10 durch die Dichtung 7 abgedichtet und das Bauteil 11 ist gegen das Bauteil 10 ebenfalls durch die Dichtung 7 abgedichtet. Dabei fungiert die Membran 7 als Dichtung. Das Bauteil 9 nimmt zwei weitere Bauteile 10 und 11 zumindest teilweise auf. Die Bauteile 9, 10 und 11 sind rotationssymmetrisch ausgebildet.

Die Membran 7 ist konzentrisch zum Kanal 4 orientiert und fassförmig ausgebildet.

Der Einlass 2 und der Auslass 3 weisen einen innendurchmesser von 8 mm und einen Außendurchmesser von 10 mm auf. Das Bauteil 10 weist eine Länge von 27 mm auf. Das Bauteil 9 fixiert das Bauteil 11 durch eine Umbördelung. Hierzu ist das Material, aus dem das Bauteil 9 gefertig ist, an der Stelle der Umbördelung verjüngt. Die Membran ist aus dem Werkstoff 70 EPDM 120209 gefertigt.

Die Ausgleichkammer könnte mit Druck beaufschlagt sein. Dabei ist denkbar, dass innerhalb der Ausgleichkammer ein Druck von 0,3 bis 0,7 bar vorherrscht. Die Beaufschlagung der Ausgleichkammer mit einem solchen Druck ist dahingehend vorteilhaft, dass die Membran bei Erwärmung des Pulsationsdämpfers durch Ausdehnung des Mediums innerhalb der Ausgleichkammer nicht beschädigt wird.

Die Ausgleichkammer könnte mit einem Druck beauschlagt sein, der größer als der Atmosphärendruck ist. Hierdurch ist es möglich, Pulsationen mit höheren Frequenzen innerhalb einer hydraulischen Leitung zu dämpfen, da die Membran unter einer relativ hohen Spannung steht und folglich eine hohe Steifigkeit aufweist.

Vor diesem Hintergrund ist es denkbar, dass die Ausgleichkammer mit Luft befüllt ist. Luft ist als Medium auf einfach Weise bereitstellbar und kann in Form von Pressluft problemlos in die Ausgleichkammer verbracht werden.

Die Ausgleichkammer könnte mit Stickstoff befüllt sein. Stickstoff zeichnet sich als Inertgas durch eine besondere chemische Trägheit aus. Diese chemische Trägheit ist von Vorteil, wenn der Pulsationsdämpfer in Verbindung mit leicht entzündlichen Fluiden verwendet wird. Stickstoff ist als solcher nicht entzündlich, kann darüber hinaus Entzündungsprozesse brennbarer Medien hemmen und folglich Brandunfällen bei Undichtigkeiten vorbeugen.

Innerhalb der Ausgleichkammer könnte ein Vakuum herrschen. Die Vorkehrung eines Vakuums ist dahingehend vorteilhaft, dass auf ein Befüllmedium verzichtet werden kann. Dies erlaubt eine besonders kostengünstige Fertigung eines Pulsationsdämpfers.

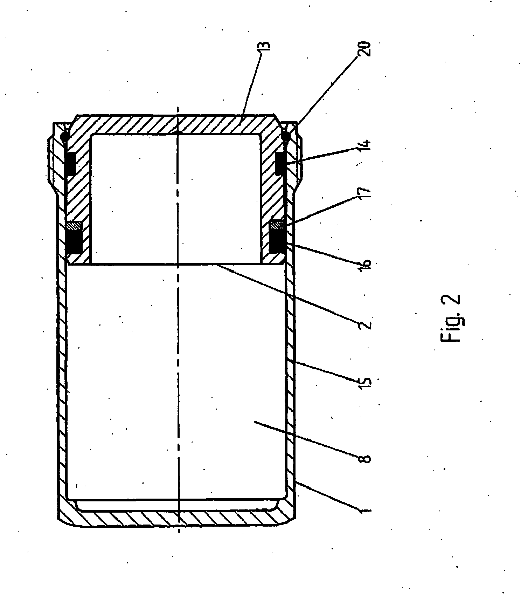

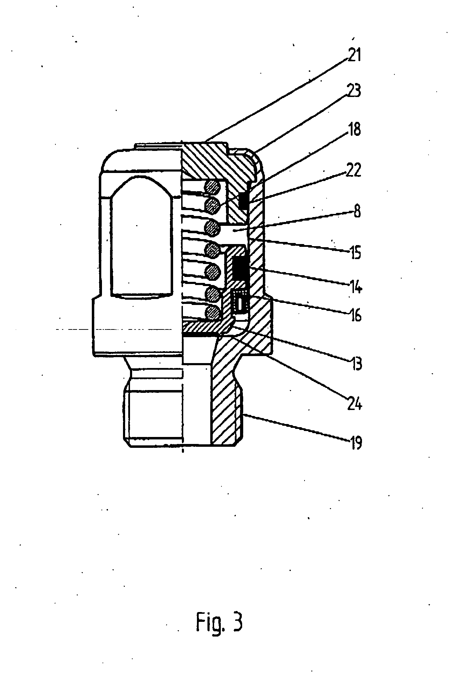

Alle Ausführungen zu den Druckverhältnissen bzw. der sich in der Ausgleichkammer befindenden Medien, welche sich auf den Pulsationsdämpfer gemäß Fig. 1 beziehen, beziehen sich auch auf die Pulsationsdämpfer gemäß Fig. 2 und Fig. 3.

Fig. 2 zeigt in einer Schnittzeichnung einen Pulsationsdämpfer, der als Kolbenspeicher verwendet werden kann. Dieser umfasst einen Grundkörper 1, wobei im Grundkörper 1 eine Ausgleichkammer 8 ausgebildet ist. Ein Kolben 13 ist zumindest teilweise innerhalb der Ausgleichkammer 8 bewegbar und ist auf der der Ausgleichkammer 8 abgewandten Seite mit Druck beaufschlagbar. Die Druckbeaufschlagung erfolgt durch ein Fluid. Die Ausgleichkammer 8 ist als abgeschlossener Raum ohne Zuleitung ausgebildet.

Dem Kolben 13 ist ein Führungsring 14 zur Anlage an der Innenwandung 15 der Ausgleichkammer 8 zugeordnet. Dem Kolben 13 ist ein Dichtring 16 zur dichtenden Anlage an der Innenwandung 15 der Ausgleichkammer 8 zugeordnet. Dabei fungiert der Dichtring 16 als Führung. Dem Kolben 13 ist ein Stützring 17 zugeordnet, der dem Dichtring 16 benachbart ist. Der Führungsring 14 bzw. der Dichtring 16 sind in Nuten angeordnet, welche im Kolben 13 ausgebildet sind.

Die Innenwandung 15 der Ausgleichkammer 8 ist spanlos gefertigt, wobei der Grundkörper 1 einstückig als Tiefziehteil ausgebildet ist. Der Innenwandung 15 des Grundkörpers 1 ist ein Sprengring 20 als Anschlag für den Kolben 13 zugeordnet.

Fig. 3 zeigt in einer Schnittansicht einen Pulsationsdämpfer, welcher in Einspritzsystemen von Kraftfahrzeugen Verwendung finden kann. Dieser weist einen Grundkörper 1 auf, wobei der Grundkörper 1 eine Ausgleichkammer 8 umfasst. Ein Kolben 13 ist innerhalb der Ausgleichkammer 8 bewegbar. Der Kolben 13 ist auf der der Ausgleichkammer 8 abgewandten Seite mit Druck durch ein Fluid beaufschlagbar. Die Ausgleichkammer 8 ist als abgeschlossener Raum ohne Zuleitung ausgebildet.

Dem Kolben 13 ist ein Führungsring 14 zur Anlage an der Innenwandung 15 der Ausgleichkammer 8 zugeordnet. Des Weiteren ist dem Kolben 13 ein Dichtring 16 zur dichtenden Anlage an der Innenwandung der Ausgleichkammer 8 zugeordnet. Dabei fungiert der Dichtring 16 als Führung.

Dem Kolben 13 ist zur Kraftbeaufschlagung eine Feder 18 zugeordnet. Die Feder 18 ist als Spiralfeder ausgebildet. Die Feder 18 ist innerhalb der Ausgleichkammer 8 angeordnet und liegt an der der Ausgleichkammer 8 zugewandten Kolbenfläche an.

Der Grundkörper 1 weist einen separaten Deckel 21 auf, welcher zusammen mit dem Kolben 13 die Ausgleichkammer 8 begrenzt. Dem Deckel 21 ist eine Dichtung 22 zugeordnet. Der Deckel 21 ist durch eine Umbördelung 23 des Grundkörpers 1 festgelegt.

Innerhalb des Grundkörpers 1 ist ein Anschlag 24 für den Kolben 13 ausgebildet.

Der Grundkörper 1 weist eine Länge von 40 mm und einen Maximaldurchmesser von 24 mm auf. Am Grundkörper 1 ist ein Gewinde 19 ausgebildet. Das Gewinde weist die Dimension M16 x 1,5 auf.

Der Grundkörper 1 ist in einem Einspritzsystem eines Kraftfahrzeugs positionierbar. Er dient dabei der Glättung der Fluidversorgung sowie der Reduzierung von Pulsationen der Fluide. Als Fluide fungieren in Einspritzsystemen von Kraftfahrzeugen Dieselkraftstoff oder Benzin.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass das zuvor rein willkürlich gewählte Ausführungsbeispiel lediglich zur Erörterung der erfindungsgemäßen Lehre dient, dieses jedoch nicht auf dieses Ausführungsbeispiel einschränkt.

## Patentansprüche

1. Pulsationsdämpfer, umfassend einen Grundkörper (1), wobei der Grundkörper (1) eine Ausgleichkammer (8) umfasst, wobei ein Kolben (13) zumindest teilweise innerhalb der Ausgleichkammer (8) bewegbar ist, wobei der Kolben (13) auf der der Ausgleichkammer (8) abgewandten Seite mit Druck beaufschlagbar ist und wobei die Ausgleichkammer (8) als abgeschlossener Raum ohne Zuleitung ausgebildet ist, **dadurch gekennzeichnet, dass** dem Kolben (13) mindestens ein Führungsring (14) zur Anlage an der Innenwandung (15) der Ausgleichkammer (8) und mindestens ein Dichtring (16) zur dichtenden Anlage an der Innenwandung (15) der Ausgleichkammer (8) zugeordnet ist, wobei dem Kolben (13) ein Stützring (17) zugeordnet ist.

2. Pulsationsdämpfer nach Anspruch 1, **dadurch gekennzeichnet, dass** der Dichtring (16) als Führung fungiert.

3. Pulsationsdämpfer nach Anspruch 1 oder 2, **dadurch gekennzeichnet, dass** dem Kolben (13) zur Kraftbeaufschlagung eine Feder (18) zugeordnet ist.

4. Pulsationsdämpfer nach Anspruch 3, **dadurch gekennzeichnet, dass** die Feder (18) innerhalb der Ausgleichkammer (8) angeordnet ist und an der der Ausgleichkammer (8) zugewandten Kolbenfläche anliegt.

5. Pulsationsdämpfer nach einem der Ansprüche 1 bis 4, **dadurch gekennzeichnet, dass** die Innenwandung (15) der Ausgleichkammer (8) zumindest teilweise spanlos gefertigt ist.

6. Pulsationsdämpfer nach einem der Ansprüche 1 bis 5, **dadurch gekennzeichnet, dass** der Grundkörper (1) ein Gewinde (19) aufweist.

7. Pulsationsdämpfer nach einem der Ansprüche 1 bis 6, **dadurch gekennzeichnet, dass** der Grundkörper (1) einstückig als Tiefziehteil ausgebildet ist.

8. Pulsationsdämpfer nach Anspruch 7, **dadurch gekennzeichnet, dass** die innere Oberfläche des Tiefziehteils eine Rauhigkeit mit Strukturen kleiner 2 µm aufweist.

9. Pulsationsdämpfer nach Anspruch 7 oder 8, **dadurch gekennzeichnet, dass** der Innenwandung (15) des Grundkörpers (8) zumindest ein Sprengring (20) als Anschlag für den Kolben (13) zugeordnet ist.

10. Pulsationsdämpfer nach einem der Ansprüche 1 bis 6, **dadurch gekennzeichnet, dass** der Grundkörper (1) einen separaten Deckel (21) aufweist, welcher zusammen mit dem Kolben (13) die Ausgleichkammer (8) begrenzt.

11. Pulsationsdämpfer nach Anspruch 10, **dadurch gekennzeichnet, dass** dem Deckel (21) eine Dichtung (22) zugeordnet und der Deckel (21) durch eine Umbördelung (23) des Grundkörpers (1) festgelegt ist.

12. Pulsationsdämpfer nach Anspruch 10 oder 11, **dadurch gekennzeichnet, dass** innerhalb des Grundkörpers (1) ein Anschlag (24) für den Kolben (13) ausgebildet ist.

13. Pulsationsdämpfer nach einem der Ansprüche 10 bis 12, **dadurch gekennzeichnet, dass** der Grundkörper (1) eine Länge von bis zu 50 mm und einen Maximaldurchmesser von bis zu 50 mm aufweist.

14. Pulsationsdämpfer nach einem der Ansprüche 1 bis 13, **dadurch gekennzeichnet, dass** der Grundkörper (1) aus Stahl, Aluminium oder Kunststoff gefertigt ist.

15. Verfahren zur Herstellung von Pulsationsdämpfem nach einem der voranstehenden Ansprüche, wobei zumindest die Bauteile des Pulsationsdämpfers, welche zur Herstellung einer abgeschlossenen Ausgleichkammer (8) ohne Zuleitung benötigt werden, in einem Arbeitsraum positioniert werden, wobei die Bauteile zur abschließenden Herstellung der Ausgleichkammer (8) zusammengefügt werden und wobei der Arbeitsraum mit dem gleichen Druck beaufschlagt wird, welcher in der fertiggestellten Ausgleichkammer (8) herrscht.

16. Verfahren nach Anspruch 15, **dadurch gekennzeichnet, dass** der Arbeitsraum mit dem gleichen Medium befüllt wird, welches sich in der fertiggestellten Ausgleichkammer (8) befindet.

17. Verwendung eines Pulsationsdämpfers nach einem der Ansprüche 1 bis 14 in hydraulischen Versorgungssystemen von Kraftfahrzeugen.

18. Verwendung nach Anspruch 17, **dadurch gekennzeichnet, dass** das hydraulische Versorgungssystem als Einspritzsystem ausgebildet ist.

## Claims

1. Pulsation damper, comprising a basic body (1), the basic body (1) comprising a compensating chamber (8), a piston (13) being movable at least partially within the compensating chamber (8), the piston (13) being capable of being acted upon with pressure on the side facing away from the compensating chamber (8), and the compensating chamber (8) being designed as a closed-off space without a supply line, **characterized in that** the piston (13) is assigned at least one guide ring (14) for bearing against the inner wall (15) of the compensating chamber (8) and at least one sealing ring (16) for bearing sealingly against the inner wall (15) of the compensating chamber (8), the piston (13) being assigned a supporting ring (17).

2. Pulsation damper according to Claim 1, **characterized in that** the sealing ring (16) functions as a guide.

3. Pulsation damper according to Claim 1 or 2, **characterized in that** a spring (18) is assigned to the piston (13) for the action of force upon the latter.

4. Pulsation damper according to Claim 3, **characterized in that** the spring (18) is arranged within the compensating chamber (8) and bears against the piston surface facing the compensating chamber (8).

5. Pulsation damper according to one of Claims 1 to 4, **characterized in that** the inner wall (15) in the compensating chamber (8) is manufactured at least partially in a non-cutting manner.

6. Pulsation damper according to one of Claims 1 to 5, **characterized in that** the basic body (1) has a thread (19).

7. Pulsation damper according to one of Claims 1 to 6, **characterized in that** the basic body (1) is produced in one piece as a deep-drawn part.

8. Pulsation damper according to Claim 7, **characterized in that** the inner surface of the deep-drawn part has a roughness with structures smaller than 2 µm.

9. Pulsation damper according to Claim 7 or 8, **characterized in that** the inner wall (15) of the basic body (8) is assigned at least one spring ring (20) as a stop for the piston (13).

10. Pulsation damper according to one of Claims 1 to 6, **characterized in that** the basic body (1) has a separate cover (21) which together with the piston (13) delimits the compensating chamber (8).

11. Pulsation damper according to Claim 10, **characterized in that** the cover (21) is assigned a seal (22), and the cover (21) is secured by means of a flanging (23) of the basic body (1).

12. Pulsation damper according to Claim 10 or 11, **characterized in that** a stop (24) for the piston (13) is formed within the basic body (1).

13. Pulsation damper according to one of Claims 10 to 12, **characterized in that** the basic body (1) has a length of up to 50 mm and a maximum diameter of up to 50 mm.

14. Pulsation damper according to one of Claims 1 to 13, **characterized in that** the basic body (1) is manufactured from steel, aluminium or plastic.

15. Method for the production of pulsation dampers according to one of the preceding claims, at least the components of the pulsation damper which are required for producing a closed-off compensating chamber (8) without a supply line are positioned in a working space, the components being joined together for the final production of the compensating chamber (8), and the working space being acted upon by the same pressure which prevails in the finished compensating chamber (8).

16. Method according to Claim 15, **characterized in that** the working space is filled with the same medium which is located in the finished compensating chamber (8).

17. Use of a pulsation damper according to one of Claims 1 to 14 in hydraulic supply systems of motor vehicles.

18. Use according to Claim 17, **characterized in that** the hydraulic supply system is designed as an injection system.

## Revendications

1. Amortisseur de pulsations comprenant un corps de base (1),
le corps de base (1) comprenant une chambre d'équilibrage (8),
un piston (13) pouvant se déplacer au moins en partie à l'intérieur de la chambre d'équilibrage (8),
une pression étant appliquée sur le côté du piston (13) non tourné vers la chambre d'équilibrage (8),
la chambre d'équilibrage (8) étant configurée sous la forme d'un espace fermé dépourvu de conduit d'amenée, **caractérisé en ce que**
au moins un anneau de guidage (14) destiné à venir se placer sur la paroi intérieure (15) de la chambre d'équilibrage (8) et au moins un anneau d'étanchéité (16) destiné à venir se placer de façon hermétique sur la paroi intérieure (15) de la chambre de compensation (8) sont associés au piston (13) et
**en ce qu'**un anneau de soutien (17) est associé au piston (13).

2. Amortisseur de pulsations selon la revendication 1, **caractérisé en ce que** l'anneau d'étanchéité (16) joue le rôle d'un guide.

3. Amortisseur de pulsations selon les revendications 1 ou 2, **caractérisé en ce qu'**un ressort (18) est associé au piston (13) pour y appliquer une force.

4. Amortisseur de pulsations selon la revendication 3, **caractérisé en ce que** le ressort (18) est disposé à l'intérieur de la chambre d'équilibrage (8) et repose sur la surface du piston tournée vers la chambre d'équilibrage (8).

5. Amortisseur de pulsations selon l'une des revendications 1 à 4, **caractérisé en ce que** la paroi intérieure (15) de la chambre d'équilibrage (8) est réalisée au moins en partie sans enlèvement de matière.

6. Amortisseur de pulsations selon l'une des revendications 1 à 5, **caractérisé en ce que** le corps de base (1) présente un filet (19).

7. Amortisseur de pulsations selon l'une des revendications 1 à 6, **caractérisé en ce que** le corps de base (1) est configuré sous la forme d'une pièce emboutie d'un seul tenant.

8. Amortisseur de pulsations selon la revendication 7, **caractérisé en ce que** la surface intérieure de la pièce emboutie présente une rugosité dotée de structures inférieure à 2 µm.

9. Amortisseur de pulsations selon les revendications 7 ou 8, **caractérisé en ce qu'**au moins un anneau expansible (20) servant de butée pour le piston (13) est associé à la paroi intérieure (15) du corps de base (8).

10. Amortisseur de pulsations selon l'une des revendications 1 à 6, **caractérisé en ce que** le corps de base (1) présente un couvercle (21) séparé qui délimite la chambre d'équilibrage (8) avec le piston (13).

11. Amortisseur de pulsations selon la revendication 10, **caractérisé en ce qu'**un joint d'étanchéité (22) est associé au couvercle (21) et **en ce que** le couvercle (21) est immobilisé par un rabattement (23) de la bordure du corps de base (1).

12. Amortisseur de pulsations selon les revendications 10 ou 11, **caractérisé en ce qu'**une butée (24) est formée pour le piston (13) à l'intérieur du corps de base (1).

13. Amortisseur de pulsations selon l'une des revendications 10 à 12, **caractérisé en ce que** le corps de base (1) présente une longueur de jusque 50 mm et un diamètre maximum de jusque 50 mm.

14. Amortisseur de pulsations selon l'une des revendications 1 à 13, **caractérisé en ce que** le corps de base (1) est réalisé en acier, en aluminium ou en matière synthétique.

15. Procédé de fabrication d'amortisseurs de pulsations selon l'une des revendications précédentes, dans lequel au moins les composants de l'amortisseur de pulsations qui sont nécessaires pour fabriquer une chambre fermée d'équilibrage (8) dépourvue de conduit d'amenée sont placés dans un espace de travail, les composants de fabrication finale de la chambre d'équilibrage (8) étant assemblés et une pression identique à celle qui règne dans la chambre d'équilibrage (8) terminée étant appliquée dans l'espace de travail.

16. Procédé selon la revendication 15, **caractérisé en ce que** la chambre de travail est remplie du même fluide que celui qui remplit la chambre d'équilibrage (8) terminée.

17. Utilisation d'un amortisseur de pulsations selon l'une des revendications 1 à 14 dans des systèmes d'alimentation hydraulique de véhicules automobiles.

18. Utilisation selon la revendication 17, **caractérisée en ce que** le système d'alimentation hydraulique est configuré comme système d'injection.
